# EUROPEAN PATENT SPECIFICATION

(11) **EP 2 804 029 B1**
(45) Date of publication and mention of the grant of the patent: **08.08.2018**
(21) Application number: 14167693.2
(22) Date of filing: 09.05.2014
(51) Int. Cl.: G02B 3/02, G02B 19/00, F21K 99/00

(54) **Lens and illuminating device having the lens**
Linse und Beleuchtungsvorrichtung mit der Linse
Lentille et dispositif d'éclairage utilisant la lentille

(30) Priority: 15.05.2013 CN 201310180026
(43) Date of publication of application: 19.11.2014
(73) Proprietor: OSRAM GmbH, 80807 München (DE)
(72) Inventor: Li, Aiai, 518053 Shenzhen (CN); Cheng, Yangang, 518053 Shenzhen (CN); Lai, Dongping, 518053 Shenzhen (CN)

(56) References cited:
- EP-A1- 2 711 615
- WO-A2-2014/044926
- CN-U- 201 836 811
- CN-U- 202 266 982
- TW-A- 201 310 076
- US-A1- 2012 014 115
- US-A1- 2012 307 503

## Description

### Technical Field

The present invention relates to a lens for an illuminating device. In addition, the present invention further relates to an illuminating device having the lens of such type.

### Background Art

Large-scale billboards are usually used outdoors for purposes of propagation and exhibition. The outdoor billboards generally have different dimensions; therefore, different types of light sources are needed for lighting to realize uniform illumination for the billboards. With the continuous progress of technology, LED chips are used more and more as the light source of the illuminating device, while due to the special lighting property of the LED light source, light emitted from the LED light source should be subject to secondary optical processing to obtain an expected optical distribution effect. In the prior art, two solutions of total internal reflection lens and asymmetric lens are disclosed, however, neither of the two solutions can well satisfy the special requirement of billboard illumination, especially in application to large-scale billboards, they cannot provide uniform illumination to the billboards. US 2012/0307503 discloses a prior art lens for an illuminating device. WO 2014/044926 (EP 2776883) and EP 2711615 are relevant prior art in the sense of Art. 54(3) EPC.

### Summary of the Invention

Therefore, the present invention provides a lens for an illuminating device. This lens can make good secondary optical processing for light from the light source in various types of application circumstances, especially in billboard illumination, so as to provide uniform illumination to a lighted object. In addition, the present invention further relates to an illuminating device having the lens of such type.

The first object of the present invention is accomplished via a lens for an illuminating device according to claim 1. The lens according to the present invention mixes two concepts of the total internal reflection lens and the asymmetric lens. Light from the light source, after passing through the lens according to the present invention, can be deflected to a predetermined region, and the optical distribution thereof is more uniform.

It is proposed according to the present invention that the lens has a symmetry plane perpendicular to the bottom surface, the lens is symmetric relative to the symmetry plane, and the lens is asymmetric relative to other cross sections perpendicular to the symmetry plane and bottom surface. According to the design principle of the present invention, the lens is formed in such a manner that an axially symmetric lens is stretched in one direction, and the lens is configured asymmetrically in a cross section perpendicular to the bottom surface and a longitudinal extending direction of the stretched lens, consequently, the light from the light source, after emerging through the lens, forms asymmetric light at both sides of the cross section, so that the light from the light source is deflected to a predetermined region, while light at both sides of the symmetry plane of the lens is symmetric such that uniform optical distribution is obtained at both sides of the symmetry plane.

Preferably, the incident surface comprises a first sub incident surface and a second sub incident surface, wherein part of light from the light source of the illuminating device, after incidence through the first sub incident surface and emerging through the emergent surface, is deflected to one side of an optical axis of the light source, and most of emergent light in the remaining part of the light, after incidence through the second sub incident surface, reflection by the total internal reflection surface and emerging through the emergent surface, likewise is deflected to the one side of the optical axis. The first sub incident surface and the emergent surface are in cooperation to form an asymmetric lens part of the lens according to the present invention, while the second sub incident surface, the total internal reflection surface and the emergent surface are in cooperation to form a total internal reflection lens part of the lens according to the present invention. Therefore, the light from the light source is deflected to the predetermined region to the greatest extent so as to improve the luminous efficiency.

Further preferably, the first sub incident surface and the second sub incident surface are symmetric relative to the symmetry plane, respectively, wherein, advantageously, the first sub incident surface is designed as a polynomial asphere. Preferably, the second sub incident surface is designed as a plane. To design the second sub incident surface as a plane is quite favorable for the demolding process when manufacturing the lens. Especially preferably, the second sub incident surface is inclined in a direction closing to the optical axis, thus, the second sub incident surface will not affect the demolding.

It is further proposed according to the present invention that the surface of the second recessed region includes the total internal reflection surface and a first demolding surface, wherein, viewed in the symmetry plane, the total internal reflection surface is arranged ajacent to the second incident surface. As a result, the light from the second incident surface can directly strike the total internal reflection surface in a shortest distance.

Preferably, the total internal reflection surface is configured as a curved surface inclined in a direction away from the optical axis, wherein the curved surface is curved towards a direction of a cavity defined by the second recessed region. The curve profile of the total internal reflection surface completely depends upon an inclination angle of the second incident surface relative to the bottom surface.

Advantageously, the total internal reflection surface and the first demolding surface are symmetric relative to the symmetry plane, respectively. Especially advantageously, the first demolding surface is configured as a free-form surface, wherein the free-form surface is inclined in a direction closing to the optical axis. A profile of the free-form surface can be arbitrary since the first demolding surface itself has no function in the optical sense. The sole standard of configuration of the free-form surface is that it does not interfere with demolding. According to the present invention the emergent surface is configured as a polynomial asphere. The emergent surface comprises a first sub emergent surface, a second sub emergent surface and a third sub emergent surface, wherein the first sub emergent surface is configured to rise in a direction away from the bottom surface, the second sub emergent surface is configured to recess in a direction towards the bottom surface and the third sub emergent surface joins the bottom surface so as to form a second demolding surface. Configurations of profiles of curves of the sub emergent surfaces of the emergent surface, especially the first and second sub emergent surfaces, are based on the first incident surface and the second incident surface. The third sub emergent surface actually is only a demolding surface and has no function in the optical sense.

Advantageously, the first sub emergent surface is configured in such a manner that a first part of light from the first sub incident surface, after emerging through the first sub emergent surface, is deflected to the one side of the optical axis of the light source. Further advantageously, the second sub emergent surface is configured in such a manner that a second part of light from the first sub incident surface, after emerging through the second sub emergent surface, is deflected to the one side of the optical axis of the light source, and most of the light in light from the second incident surface, after reflection by the total internal reflection surface and emerging through the second sub emergent surface, is deflected to the one side of the optical axis of the light source.

Advantageously, the first sub emergent surface, the second sub emergent surface and the third sub emergent surface are in smooth transition therebetween, wherein the third sub emergent surface is inclined in a direction closing to the optical axis, which is quite favorable for the demolding process when manufacturing the lens.

Preferably, the first sub emergent surface, the second sub emergent surface and the third sub emergent surface are symmetric relative to the symmetry plane. It is proposed according to the present invention that the first recessed region is configured as an accommodation cavity of the light source, and the second recessed region is configured as an assistant demolding cavity.

The other object of the present invention is accomplished via an illuminating device, comprising a light source, wherein the illuminating device further comprises the lens of the above type.

Preferably, the light source comprises a printed circuit board and at least LED chip arranged on the printed circuit board, wherein the at least one LED chip is arranged in the first recessed region of the lens
It shall be understood that both the above general description and the following detailed description are for illustrative and explanative purposes in order to provide further description of the claimed present invention.

### Brief Description of the Drawings

The accompanying drawings constitute a part of the present Description and are used to provide further understanding of the present invention. Such accompanying drawings illustrate the embodiments of the present invention and are used to describe the principles of the present invention together with the Description. In the accompanying drawings the same components are represented by the same reference numbers. As shown in the drawings:
Fig. 1 is a cross-section view of a lens according to the present invention cut off through a symmetric plane;
Fig. 2 is a perspective view of the lens according to the present invention viewed from a bottom direction;
Fig. 3 is an optical diagram of the lens according to the present invention; and
Fig. 4 is a top view of an illuminating device having the lens according to the present invention.

### Detailed Description of the Embodiments

In the following detailed description, reference is made to the accompanying drawings, which form a part hereof, and in which is shown by way of illustration specific embodiments in which the invention may be practiced. In this regard, directional terminology, such as "left", "right", "upper", "lower", is used in reference to the orientation of the figures being described. Because components of embodiments of the present invention can be positioned in a number of different orientations, the directional terminology is used for purposes of illustration and is in no way limiting. It is to be understood that other embodiments may be utilized and structural or logical changes may made without departing from the scope of the present invention. The following detailed description, therefore, is not to be taken in a limiting sense, and the scope of the present invention is defined by the appended claims.

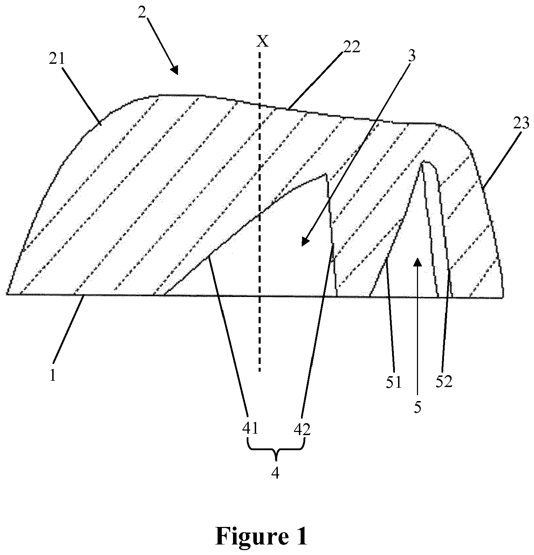

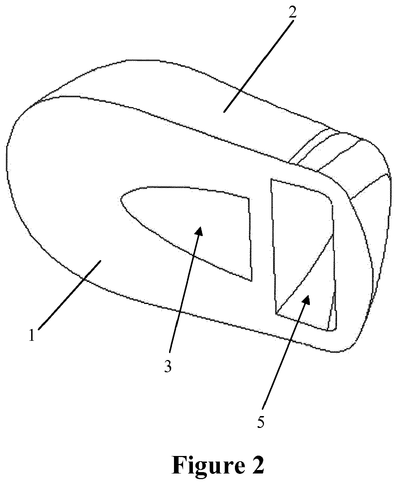

Fig. 1 shows a cross-section view of a lens 100 according to the present invention cut off through a symmetric plane. The lens 100 comprises a bottom surface 1 and an emergent surface 2 rising from the bottom surface 1. The bottom surface 1 defines a first recessed region 3, a surface of the first recessed region 3 forms an incident surface 4. It can be seen further from the figure that the bottom surface 1 also defines a second recessed region 5 adjacent to the first recessed region 3, wherein the first recessed region 3 is configured as an accommodation cavity of a light source 6, while the second recessed region 5 is configured as an assistant demolding cavity. The lens 100 has a symmetry plane (a plane defined by the paper surface) perpendicular to the bottom surface 1, the lens 100 is symmetric relative to the symmetry plane, and the lens 100 is asymmetric relative to other cross sections perpendicular to the symmetry plane and bottom surface 1 (see Fig. 2). In a practical manufacturing process of the lens, the lens 100 is formed in such a manner that an axially symmetric lens is stretched in one direction, and the lens is configured asymmetrically in a cross section perpendicular to the bottom surface 1 and a longitudinal extending direction of the stretched lens 100, as shown in the figure.

It can be seen further from the figure that the incident surface 4 comprises a first sub incident surface 41 and a second sub incident surface 42, and the first sub incident surface 41 and the second sub incident surface 42 are symmetric relative to the symmetry plane, respectively. In the present example, the first sub incident surface 41 is designed as a polynomial asphere, the second sub incident surface 42 is designed as a plane, and the second sub incident surface 42 is inclined in a direction closing to an optical axis X, and the second sub incident surface 42 so configured will not affect demolding.

On top of the lens 100, the emergent surface 2 is shown, and it is likewise configured as a polynomial asphere. It can be seen from the figure that the emergent surface 2 comprises a first sub emergent surface 21, a second sub emergent surface 22 and a third sub emergent surface 23, wherein the first sub emergent surface 21 is configured to rise in a direction away from the bottom surface 1, the second sub emergent surface 22 is configured to recess in a direction towards the bottom surface 1 and the third sub emergent surface 23 joins the bottom surface 1 so as to form a second demolding surface. Besides, the first sub emergent surface 21, the second sub emergent surface 22 and the third sub emergent surface 23 are in smooth transition therebetween, wherein the third sub emergent surface 23 is inclined towards the direction of the optical axis X, and the first sub emergent surface 21, the second sub emergent surface 22 and the third sub emergent surface 23 are symmetric relative to the symmetry plane, respectively. Configurations of profiles of curves of the sub emergent surfaces 21, 22, 23 of the emergent surface 2, especially the first and second sub emergent surfaces 21, 22, are based on the first incident surface 41 and the second incident surface 42. The third sub emergent surface 23 actually is only a demolding surface and has no function in the optical sense.

In the diagram of Fig. 1, the second recessed region 5 is shown on the right side of the first recessed region 3, wherein a surface of the second recessed region 5 includes a total internal reflection surface 51 and a first demolding surface 52, wherein, viewed in the symmetry plane, the total internal reflection surface 51 is arranged ajacent to the second incident surface 42, that is to say, the total internal reflection surface 51 is arranged on the right side of the incident surface 42. In addition, the total internal reflection surface 51 is configured as a curved surface inclined in a direction away from the optical axis X, wherein the curved surface is curved towards a direction of a cavity defined by the second recessed region 5. Besides, the total internal reflection surface 51 and the first demolding surface 52 are symmetric relative to the symmetry plane, respectively, and the first demolding surface 52 is configured as a free-form surface, wherein the free-form surface is inclined in a direction closing to the optical axis X, wherein a profile of the free-form surface can be arbitrary since the first demolding surface 52 itself has no function in the optical sense. The sole standard of configuration of the free-form surface is that it does not interfere with demolding.

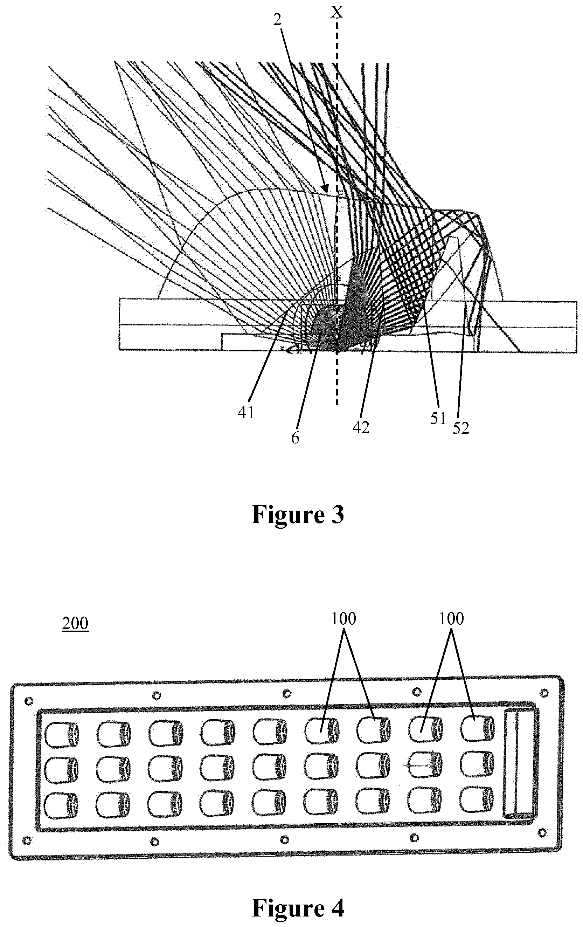

During configuration of the lens 100 according to the present invention, curves of the first incident surface 41, the first emergent surface 21 and the second emergent surface 22 are in coordination with each other so as to ensure that the light, after passing through the lens 100, is deflected to the left side of the lens 100 shown in the figure (see Fig. 3). In addition, the curve profile of the total internal reflection surface 51 and the curve of the second emergent surface 22 are in coordination with each other so as to ensure that the light, after passing through the lens 100, is deflected to the left side of the lens 100 shown in the figure.

Fig. 2 shows a perspective view of the lens 100 according to the present invention viewed from a bottom direction. It can be seen visually from the figure that the lens 100 is a stretched lens with a flat bottom, wherein the first recessed region 3 and the second recessed region 5 are defined in the bottom surface, wherein the light source 6 is arranged in the first recessed region 3. The second recessed region 5 serves a function of providing the total internal reflection surface 51, and other parts of the second recessed region 5 are mainly assistant areas favorable for demolding.

In the solution of the present invention, the light emerging through the lens 100 should be deflected towards the left side of the lens 100, therefore, part of the light from the light source 6 arranged in the first recessed region 3, after incidence through the incident surface 4 and emerging through the emergent surface 2, is deflected to one side of the optical axis X (left side of the lens 100 shown in the figure) of the light source, and most of emergent light in the remaining part of light, after incidence through the incident surface 4, reflection by the total internal reflection surface 51, and emerging through the emergent surface 2, is deflected to the one side of the optical axis X.

In reference to the optical diagram of the lens 100 according to the present invention as shown in Fig. 3, a part of light from the light source 6 is incident through the first sub incident surface 41, wherein a first part of light from the first sub incident surface 41, after emerging through the first sub emergent surface 21, is deflected to one side of the optical axis X of the light source, a second part of light from the first sub incident surface 41, after emerging through the second sub emergent surface 21, is deflected to one side of the optical axis X of the light source, and most of light in the light from the second incident surface 42, after reflection by the total internal reflection surface 51 and emerging through the second sub emergent surface 22, is deflected to one side of the optical axis X of the light source. As a result, light emerging from the light source 6 can be deflected to a predetermined region, and the optical distribution thereof is more uniform. It should be noted herein that the light incident through the second incident surface 42 cannot be completely reflected by the total internal reflection surface 51 because, due to the requirement of manufacturing, the total internal reflection surface 51 cannot completely extend to the emergent surface 2, and a certain space must be retained between the total internal reflection surface 51 and the incident surface 2, otherwise the lens 100 will be broken herein, and then the first demolding surface 52 on the right side of the total internal reflection surface 51 cannot be formed. In a practical manufacturing process, such lens 100 cannot be demolded from the mould. In addition, it should be pointed out that light leaks between the total internal reflection surface 51 and the incident surface are in an extremely small quantity, the influence of which on the optical performance of the lens 100 according to the present invention is negligible.

Fig. 4 is a top view of an illuminating device 200 having the lens 100 according to the present invention. It can be seen from the figure that the illuminating device 200 has a basic profile of a rectangle, wherein the light source 6 of the illuminating device 200 is configured as an LED chip arranged in a housing, and a lens array having a plurality of lenses 100 in an array is arranged at opening of the housing. In the solution of the present invention, a plurality of LED chips are arranged on the printed circuit board, wherein one lens 100 corresponds to one LED chip of the illuminating device. Besides, it can be seen from the figure that the lenses 100 are arranged regularly on the housing, that is to say, light emerging through each lens 100 is deflected to the left side of the illuminating device shown in the figure, therefore, the illuminating device having the lenses 100 of such type can uniformly light billboards with a relatively large scale.

The above is merely preferred embodiments of the present invention but not to limit the present invention. For the person skilled in the art, the present invention may have various alterations and changes.

### List of reference signs

- 1: bottom surface
- 2: emergent surface
- 21: first emergent surface
- 22: second emergent surface
- 23: third emergent surface
- 3: first recessed region
- 4: incident surface
- 41: first incident surface
- 42: second incident surface
- 5: second recessed region
- 51: total internal reflection surface
- 52: first demolding surface
- 6: light source
- X: optical axis
- 100: lens
- 200: illuminating device

## Claims

1. A lens (100) for an illuminating device, comprising a bottom surface (1) and an emergent surface (2) rising from the bottom surface (1), the bottom surface (1) defining a first recessed region (3), a surface of the first recessed region (3) forming an incident surface (4), wherein the bottom surface (1) further defines a second recessed region (5) adjacent to the first recessed region (3), at least part of a surface of the second recessed region (5) forming a total internal reflection surface (51), wherein part of light from a light source (6) of the illuminating device, after incidence through the incident surface (4) and emerging through the emergent surface (2), is deflected to one side of an optical axis (X) of the light source (6), and most of emergent light of a remaining part of the light, after incidence through the incident surface (4), reflection the total internal reflection surface (51) and emerging through the emergent surface (2), is deflected to the one side of the optical axis (X), wherein the lens (100) has a symmetry plane perpendicular to the bottom surface (1), the lens (100) being symmetric relative to the symmetry plane, and the lens (100) being asymmetric relative to other cross sections perpendicular to the symmetry plane and the bottom surface (1), and wherein the emergent surface (2) comprises a first sub emergent surface (21), a second sub emergent surface (22) and a third sub emergent surface (23), wherein the first sub emergent surface (21) is configured to rise in a direction away from the bottom surface (1), **characterized in that** the emergent surface (2) is configured as a polynomial asphere, **in that** the second sub emergent surface (22) is configured to recess in a direction towards the bottom surface (1) and **in that** the third sub emergent surface (23) joins the bottom surface (1) so as to form a second demolding surface.

2. The lens (100) according to Claim 1, **characterized in that** the incident surface (4) comprises a first sub incident surface (41) and a second sub incident surface (42), wherein part of light from the light source, after incidence through the first sub incident surface (41) and emerging through the emergent surface (2), is deflected to the one side of the optical axis (X) of the light source, and most of emergent light of a remaining part of light, after incidence through the second sub incident surface (42), reflection by the total internal reflection surface (51) and emerging through the emergent surface (2), is also deflected to the one side of the optical axis (X).

3. The lens (100) according to Claim 2, **characterized in that** the first sub incident surface (41) and the second sub incident surface (42) are symmetric relative to the symmetry plane, respectively.

4. The lens (100) according to Claim 3, **characterized in that** the first sub incident surface (41) is designed as a polynomial asphere.

5. The lens (100) according to Claim 3, **characterized in that** the second sub incident surface (42) is designed as a plane.

6. The lens (100) according to Claim 5, **characterized in that** the second sub incident surface (42) is inclined in a direction closing to the optical axis (X).

7. The lens (100) according to any of Claims 1-6, **characterized in that** the surface of the second recessed region (5) includes the total internal reflection surface (51) and a first demolding surface (52), wherein, viewed in the symmetry plane, the total internal reflection surface (51) is arranged adjacent to the second incident surface (42).

8. The lens (100) according to Claim 7, **characterized in that** the total internal reflection surface (51) is configured as a curved surface inclined in a direction away from the optical axis (X), wherein the curved surface is curved towards a direction of a cavity defined by the second recessed region (5).

9. The lens (100) according to Claim 7, **characterized in that** the total internal reflection surface (51) and the first demolding surface (52) are symmetric relative to the symmetry plane, respectively.

10. The lens (100) according to Claim 9, **characterized in that** the first demolding surface (52) is configured as a free-form surface, wherein the free-form surface is inclined in a direction closing to the optical axis (X).

11. The lens (100) according to Claim 1, **characterized in that** the first sub emergent surface (21) is configured in such a manner that a first part of light from the first sub incident surface (41), after emerging through the first sub emergent surface (21), is deflected to the one side of the optical axis (X) of the light source.

12. The lens (100) according to Claim 11, **characterized in that** the second sub emergent surface (22) is configured in such a manner that a second part of light from the first sub incident surface (41), after emerging through the second sub emergent surface (21), is deflected to the one side of the optical axis (X) of the light source, and most of light in light from the second incident surface (42), after reflection by the total internal reflection surface (51) and emerging through the second sub emergent surface (22), is deflected to the one side of the optical axis (X) of the light source.

13. The lens (100) according to Claim 1, **characterized in that** the first sub emergent surface (21), the second sub emergent surface (22) and the third sub emergent surface (23) are in smooth transition therebetween, wherein the third sub emergent surface (23) is inclined in a direction closing to the optical axis (X).

14. The lens (100) according to Claim 1, **characterized in that** the first sub emergent surface (21), the second sub emergent surface (22) and the third sub emergent surface (23) are symmetric relative to the symmetry plane.

15. The lens (100) according to any of Claims 1-6, **characterized in that** the first recessed region (3) is configured as an accommodation cavity of the light source, and the second recessed region (5) is configured as an assistant demolding cavity.

16. An illuminating device (200), comprising a light source (6), **characterized in that** the illuminating device (200) further comprises at least one lens (100) according to any of Claims 1-15.

17. The illuminating device (200) according to Claim 16, **characterized in that** the light source (6) comprises a printed circuit board and at least LED chip arranged on the printed circuit board, wherein said at least one LED chip is arranged in the first recessed region (3) of the lens (100).

## Patentansprüche

1. Linse (100) für eine Beleuchtungsvorrichtung, umfassend eine Bodenfläche (1) und eine von der Bodenfläche (1) ansteigende Austrittsfläche (2), wobei die Bodenfläche (1) einen ersten vertieften Bereich (3) definiert, eine Fläche des ersten vertieften Bereichs (3) eine Einfallsfläche (4) bildet, wobei die Bodenfläche (1) ferner einen zweiten vertieften Bereich (5) benachbart zu dem ersten vertieften Bereich (3) definiert, zumindest ein Teil einer Fläche des zweiten vertieften Bereichs (5) eine innere Totalreflexionsfläche (51) bildet, wobei ein Teil des Lichts von einer Lichtquelle (6) der Beleuchtungsvorrichtung nach Einfall durch die Einfallsfläche (4) und Austritt durch die Austrittsfläche (2) zu einer Seite einer optischen Achse (X) der Lichtquelle (6) abgelenkt ist, und das meiste des Austrittslichts eines verbleibenden Teils des Lichts nach Einfall durch die Einfallsfläche (4), Reflexion durch die innere Totalreflexionsfläche (51), und Austritt durch die Austrittsfläche (2) zu der einen Seite der optischen Achse (X) abgelenkt ist, wobei die Linse (100) eine Symmetrieebene senkrecht zu der Bodenfläche (1) aufweist, die Linse (100) bezüglich der Symmetrieebene symmetrisch ist, und die Linse (100) bezüglich anderer Querschnitte, die senkrecht zu der Symmetrieebene und der Bodenfläche (1) sind, asymmetrisch ist, und wobei die Austrittsfläche (2) eine erste Austrittsteilfläche (21), eine zweite Austrittsteilfläche (22) und eine dritte Austrittsteilfläche (23) umfasst, wobei die erste Austrittsteilfläche (21) so ausgebildet ist, dass sie in einer Richtung weg von der Bodenfläche (1) ansteigt, **dadurch gekennzeichnet, dass** die Austrittsfläche (2) als eine polynomiale Asphäre ausgebildet ist, dass die zweite Austrittsteilfläche (22) so ausgebildet ist, dass sie sich in einer Richtung zu der Bodenfläche (1) hin vertieft, und dass die dritte Austrittsteilfläche (23) mit der Bodenfläche (1) verbunden ist, um eine zweite Entformungsfläche zu bilden.

2. Linse (100) nach Anspruch 1, **dadurch gekennzeichnet, dass** die Einfallsfläche (4) eine erste Einfallsteilfläche (41) und eine zweite Einfallsteilfläche (42) umfasst, wobei ein Teil des Lichts von der Lichtquelle nach Einfall durch die erste Einfallsteilfläche (41) und Austritt durch die Austrittsfläche (2) auf die eine Seite der optischen Achse (X) der Lichtquelle abgelenkt ist, und das meiste des Austrittslichts eines verbleibenden Teils des Lichts nach Einfall durch die zweite Einfallsteilfläche (42), Reflexion durch die innere Totalreflexionsfläche (51), und Austritt durch die Austrittsfläche (2) ebenfalls auf die eine Seite der optischen Achse (X) abgelenkt ist.

3. Linse (100) nach Anspruch 2, **dadurch gekennzeichnet, dass** die erste Einfallsteilfläche (41) und die zweite Einfallsteilfläche (42) jeweils bezüglich der Symmetrieebene symmetrisch sind.

4. Linse (100) nach Anspruch 3, **dadurch gekennzeichnet, dass** die erste Einfallsteilfläche (41) als polynomiale Asphäre gestaltet ist.

5. Linse (100) nach Anspruch 3, **dadurch gekennzeichnet, dass** die zweite Einfallsteilfläche (42) als Ebene gestaltet ist.

6. Linse (100) nach Anspruch 5, **dadurch gekennzeichnet, dass** die zweite Einfallsteilfläche (42) in einer Richtung zu der optischen Achse (X) hin geneigt ist.

7. Linse (100) nach einem der Ansprüche 1 bis 6, **dadurch gekennzeichnet, dass** die Fläche des zweiten vertieften Bereichs (5) die innere Totalreflexionsfläche (51) und eine erste Entformungsfläche (52) aufweist, wobei, in der Symmetrieebene gesehen, die innere Totalreflexionsfläche (51) benachbart zu der zweiten Einfallsfläche (42) angeordnet ist.

8. Linse (100) nach Anspruch 7, **dadurch gekennzeichnet, dass** die innere Totalreflexionsfläche (51) als eine gekrümmte Fläche ausgebildet ist, die in einer Richtung weg von der optischen Achse (X) geneigt ist, wobei die gekrümmte Fläche in Richtung eines Hohlraums gekrümmt ist, der durch den zweiten vertieften Bereich (5) definiert wird.

9. Linse (100) nach Anspruch 7, **dadurch gekennzeichnet, dass** die innere Totalreflexionsfläche (51) und die erste Entformungsfläche (52) jeweils bezüglich der Symmetrieebene symmetrisch sind.

10. Linse (100) nach Anspruch 9, **dadurch gekennzeichnet, dass** die erste Entformungsfläche (52) als Freiformfläche ausgebildet ist, wobei die Freiformfläche in einer Richtung zu der optischen Achse (X) hin geneigt ist.

11. Linse (100) nach Anspruch 1, **dadurch gekennzeichnet, dass** die erste Austrittsteilfläche (21) derart ausgebildet ist, dass ein erster Teil des Lichts von der ersten Einfallsteilfläche (41) nach Austritt durch die erste Austrittsteilfläche (21) zu der einen Seite der optischen Achse (X) der Lichtquelle abgelenkt ist.

12. Linse (100) nach Anspruch 11, **dadurch gekennzeichnet, dass** die zweite Austrittsteilfläche (22) derart ausgebildet ist, dass ein zweiter Teil des Lichts von der ersten Einfallsteilfläche (41) nach Austritt durch die zweite Austrittsteilfläche (21) zu der einen Seite der optischen Achse (X) der Lichtquelle abgelenkt ist, und das meiste Licht des Lichts von der zweiten Einfallsfläche (42) nach Reflexion durch die innere Totalreflexionsfläche (51) und Austritt durch die zweite Austrittsteilfläche (22) zu der einen Seite der optischen Achse (X) der Lichtquelle abgelenkt ist.

13. Linse (100) nach Anspruch 1, **dadurch gekennzeichnet, dass** die erste Austrittsteilfläche (21), die zweite Austrittsteilfläche (22), und die dritte Austrittsteilfläche (23) dazwischen einen fließenden Übergang bilden, wobei die dritte Austrittsteilfläche (23) in eine Richtung zu der optischen Achse (X) hin geneigt ist.

14. Linse (100) nach Anspruch 1, **dadurch gekennzeichnet, dass** die erste Austrittsteilfläche (21), die zweite Austrittsteilfläche (22), und die dritte Austrittsteilfläche (23) bezüglich der Symmetrieebene symmetrisch sind.

15. Linse (100) nach einem der Ansprüche 1 bis 6, **dadurch gekennzeichnet, dass** der erste vertiefte Bereich (3) als ein Aufnahmehohlraum für die Lichtquelle ausgebildet ist und der zweite vertiefte Bereich (5) als ein Hilfsentformungshohlraum ausgebildet ist.

16. Beleuchtungsvorrichtung (200), umfassend eine Lichtquelle (6), **dadurch gekennzeichnet, dass** die Beleuchtungsvorrichtung (200) ferner mindestens eine Linse (100) nach einem der Ansprüche 1 bis 15 umfasst.

17. Beleuchtungsvorrichtung (200) nach Anspruch 16, **dadurch gekennzeichnet, dass** die Lichtquelle (6) eine Leiterplatte und mindestens einen auf der Leiterplatte angeordneten LED-Chip umfasst, wobei der mindestens eine LED-Chip in dem ersten vertieften Bereich (3) der Linse (100) angeordnet ist.

## Revendications

1. Lentille (100) pour un dispositif d'éclairage, comprenant une surface inférieure (1) et une surface émergente (2) s'élevant au départ de la surface inférieure (1), la surface inférieure (1) définissant une première région évidée (3), une surface de la première région évidée (3) formant une surface incidente (4), dans laquelle la surface inférieure (1) définit en outre une deuxième région évidée (5) adjacente à la première région évidée (3), au moins une partie d'une surface de la deuxième région évidée (5) formant une surface de réflexion interne totale (51), dans laquelle une partie de la lumière d'une source lumineuse (6) du dispositif d'éclairage est, après incidence à travers la surface incidente (4) et émergence à travers la surface émergente (2), déviée vers un côté d'un axe optique (X) de la source lumineuse (6), et la plupart de la lumière émergente d'une partie résiduelle de la lumière est, après incidence à travers la surface incidente (4), réflexion par la surface de réflexion interne totale (51) et émergence à travers la surface émergente (2), déviée vers ledit côté de l'axe optique (X), dans laquelle la lentille (100) possède un plan de symétrie perpendiculaire à la surface inférieure (1), la lentille (100) étant symétrique par rapport au plan de symétrie, et la lentille (100) étant asymétrique par rapport à d'autres sections transversales perpendiculaires au plan de symétrie et à la surface inférieure (1), et dans laquelle la surface émergente (2) comprend une première surface sous-émergente (21), une deuxième surface sous-émergente (22) et une troisième surface sous-émergente (23), dans laquelle la première surface sous-émergente (21) est configurée afin de s'élever sans un sens dirigé à l'écart de la surface inférieure (1), **caractérisée en ce que** la surface émergente (2) est configurée sous la forme d'une surface asphérique polynomiale, **en ce que** la deuxième surface sous-émergente (22) est configurée afin de s'évider dans un sens dirigé vers la surface inférieure (1) et **en ce que** la troisième surface sous-émergente (23) joint la surface inférieure (1) de sorte à former une deuxième surface de démoulage.

2. Lentille (100) selon la revendication 1, **caractérisée en ce que** la surface incidente (4) comprend une première surface de sous-incidence (41) et une deuxième surface de sous-incidence (42), dans laquelle une partie de la lumière de la source lumineuse est, après incidence à travers la première surface de sous-incidence (41) et émergence à travers la surface émergente (2), déviée vers le côté de l'axe optique (X) de la source lumineuse, et la plupart de la lumière émergente d'une partie résiduelle de la lumière est, après incidence à travers la deuxième surface de sous-incidence (42), réflexion par la surface de réflexion interne totale (51) et émergence à travers la surface émergente (2), également déviée vers ledit côté de l'axe optique (X).

3. Lentille (100) selon la revendication 2, **caractérisée en ce que** la première surface de sous-incidence (41) et la deuxième surface de sous-incidence (42) sont symétriques par rapport au plan de symétrie, respectivement.

4. Lentille (100) selon la revendication 3, **caractérisée en ce que** la première surface de sous-incidence (41) est conçue sous la forme d'une surface asphérique polynomiale.

5. Lentille (100) selon la revendication 3, **caractérisée en ce que** la deuxième surface de sous-incidence (42) est conçue sous la forme d'un plan.

6. Lentille (100) selon la revendication 5, **caractérisée en ce que** la deuxième surface de sous-incidence (42) est inclinée dans un sens se rapprochant de l'axe optique (X).

7. Lentille (100) selon l'une quelconque des revendications 1 à 6, **caractérisée en ce que** la surface de la deuxième région évidée (5) comprend la surface de réflexion interne totale (51) et une première surface de démoulage (52), dans laquelle, dans le plan de symétrie, la surface de réflexion totale (51) est disposée de façon adjacente à la deuxième surface d'incidence (42).

8. Lentille (100) selon la revendication 7, **caractérisée en ce que** la surface de réflexion interne totale (51) est configurée sous la forme d'une surface incurvée inclinée dans un sens dirigé à l'écart de l'axe optique (X), dans laquelle la surface incurvée est incurvée dans le sens d'une cavité définie par la deuxième région évidée (5).

9. Lentille (100) selon la revendication 7, **caractérisée en ce que** la surface de réflexion interne totale (51) et la première surface de démoulage (52) sont symétriques par rapport au plan de symétrie, respectivement.

10. Lentille (100) selon la revendication 9, **caractérisée en ce que** la première surface de démoulage (52) est configurée sous la forme d'une surface à forme libre, dans laquelle la surface à forme libre est inclinée dans un sens se rapprochant de l'axe optique (X).

11. Lentille (100) selon la revendication 1, **caractérisée en ce que** la première surface sous-émergente (21) est configurée de telle manière qu'une première partie de la lumière de la première surface de sous-incidence (41) est, après émergence à travers la première surface sous-émergente (21), déviée vers le côté de l'axe optique (X) de la source lumineuse.

12. Lentille (100) selon la revendication 11, **caractérisée en ce que** la deuxième surface sous-émergente (22) est configurée de telle manière qu'une deuxième partie de la lumière de la première surface de sous-incidence (41) est, après émergence à travers la deuxième surface sous-émergente (21), déviée vers le côté de l'axe optique (X) de la source lumineuse, et la plupart de la lumière de la deuxième surface d'incidence est, après réflexion par la surface de réflexion interne totale (51) et émergence à travers la surface sous-émergente (22), déviée vers ledit côté de l'axe optique (X) de la source lumineuse.

13. Lentille (100) selon la revendication 1, **caractérisée en ce que** la première surface sous-émergente (21), la deuxième surface sous-émergente (22) et la troisième surface sous-émergente (23) présentent entre elles une transition douce, dans laquelle la troisième surface sous-émergente (23) est inclinée dans un sens se rapprochant de l'axe optique (X).

14. Lentille (100) selon la revendication 1, **caractérisée en ce que** la première surface sous-émergente (21), la deuxième surface sous-émergente (22) et la troisième surface sous-émergente (23) sont symétriques par rapport au plan de symétrie.

15. Lentille (100) selon l'une quelconque des revendications 1 à 6, **caractérisée en ce que** la première région évidée (3) est configurée sous la forme d'une cavité de logement de la source lumineuse, et la deuxième région évidée (5) est configurée sous la forme d'une cavité de démoulage auxiliaire.

16. Dispositif d'éclairage (200), comprenant une source lumineuse (6), **caractérisé en ce que** le dispositif d'éclairage (200) comprend au moins une lentille (100) selon l'une quelconque des revendications 1 à 15.

17. Dispositif d'éclairage (200) selon la revendication 16, **caractérisé en ce que** la source lumineuse (6) comprend une carte de circuit imprimé et au moins [une] puce LED disposée sur la carte de circuit imprimé, dans lequel ladite au moins une puce LED est disposée dans la première région évidée (3) de la lentille (100).
